(19) **Europäisches Patentamt / European Patent Office / Office européen des brevets**

(11) **EP 3 339 875 B1**

(12) **FASCICULE DE BREVET EUROPEEN**

(45) Date de publication et mention
de la délivrance du brevet:
**03.06.2020 Bulletin 2020/23**

(51) Int Cl.:
**G01S 3/80** (2006.01)

(21) Numéro de dépôt: **17206575.7**

(22) Date de dépôt: **12.12.2017**

(54) **ANTENNE DE RÉCEPTION ACOUSTIQUE**

AKUSTISCHE EMPFANGSANTENNE

ACOUSTIC ANTENNA RECEIVER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.12.2016 FR 1601805**

(43) Date de publication de la demande:
**27.06.2018 Bulletin 2018/26**

(73) Titulaire: **Thales
92400 Courbevoie (FR)**

(72) Inventeurs:
• **DELAGE, Sylvain
91400 ORSAY (FR)**
• **LUC, François
75016 PARIS (FR)**
• **JACQUET, Jean-Claude
91400 ORSAY (FR)**
• **AUBRY, Raphaël
91940 GOMETZ LE CHATEL (FR)**

(74) Mandataire: **Derval, Estelle et al
Marks & Clerk France
Conseils en Propriete Industrielle
Immeuble Visium
22, avenue Aristide Briand
94117 Arcueil Cedex (FR)**

(56) Documents cités:
**US-A1- 2010 142 326**

• **MURINO V ET AL: "Three-dimensional image
generation and processing in underwater
acoustic vision", PROCEEDINGS OF THE IEEE,
IEEE. NEW YORK, US, vol. 88, no. 12, 1 décembre
2000 (2000-12-01), pages 1903-1948,
XP011450793, ISSN: 0018-9219, DOI:
10.1109/5.899059**
• **SHAO LEI ET AL: "Emission and detection of
surface acoustic waves by AlGaN/GaN high
electron mobility transistors", APPLIED
PHYSICS LETTERS, A I P PUBLISHING LLC, US,
vol. 99, no. 24, 12 décembre 2011 (2011-12-12),
pages 243507-243507, XP012152749, ISSN:
0003-6951, DOI: 10.1063/1.3665625 [extrait le
2011-12-15]**

**Description**

Le domaine de l'invention est celui des caméras acoustiques. Plus particulièrement, l'invention se rapporte à une antenne de réception pour caméra acoustique.

Les caméras acoustiques ont pour fonction de réaliser des images d'une scène en milieu liquide à partir de la détection, par une antenne de réception acoustique de la caméra acoustique, d'ondes acoustiques ou échos provenant d'objets (ou cibles) présents dans ce milieu liquide. Les images obtenues sont bidimensionnelles ou monodimensionnelles. La présente invention se rapporte aux systèmes d'imagerie acoustique qui permettent d'obtenir des images par traitement des échos reçus des objets dont on souhaite faire l'image.

Les caméras acoustiques sont notamment utilisées dans le domaine sous-marin pour la détection, la classification et la caractérisation d'objets notamment pour les opérations de déminage, de contrôle de coques de navires, de pilotage de véhicules sous-marins. Elles ont un intérêt particulier dans les eaux turbides où les caméras optiques sont inefficaces du fait de la très faible visibilité. L'invention s'applique aussi au domaine de l'échographie industrielle ou médicale.

La classification et la caractérisation non ambigües des objets requièrent une capacité de formation de voies (« beam forming » en terminologie anglo-saxonne) dans deux dimensions perpendiculaires (classiquement en site et en gisement) de façon à fournir des images tridimensionnelles (présentant une résolution en site, gisement et distance). Ceci requière des antennes comprenant un réseau bidimensionnel de détecteurs acoustiques élémentaires.

Un ou des émetteurs répartis ayant une phase contrôlée émettent un signal ultrasonore dans une gamme de fréquences situées entre quelques centaines de kHz et quelques MHz. Le son est réfléchi sur les cibles à caractériser et est détecté par des capteurs ultrasonores. L'information d'amplitude et de phase permet de reconstituer une image avec des précisions subcentimétriques. Le principe de fonctionnement consiste généralement en une émission omnidirectionnelle (ou selon un lobe ouvert destiné à couvrir la portion de l'espace d'intérêt) et une formation de voie à la réception. Le plus souvent la formation de voies est dite bidimensionnelle (gisement, distance). Peu de systèmes fournissent une véritable résolution 3D (gisement, site, distance) qui est indispensable au pilotage des engins sous-marins en eaux turbide.

Les antennes de réception actuelles sont basées sur des réseaux bidimensionnels utilisant des capteurs acoustiques piézoélectriques massifs ou sur des composites piézoélectriques (dits composites 1-3) à base de céramiques piézoélectrique de type PZT qui présentent d'excellents coefficients de couplage piézoélectrique.

Toutefois, ces antennes présentent un certain nombre d'inconvénients.

Les antennes à base de capteurs piézoélectriques massifs du type PZT ne peuvent être réalisées de façon collective. Ces capteurs piézoélectriques sont agencés en une matrice bidimensionnelle en utilisant des procédés de report individuels. Ces procédés sont coûteux, notamment en termes de durée du processus de fabrication. L'utilisation de composites piézoélectriques permet une fabrication collective de matrices de détecteurs. L'aspect collectif de la fabrication est important pour la réduction de coûts mais aussi pour la performance d'imagerie car, pour un grand nombre de capteurs, le niveau d'atténuation des « lobes secondaires » (résultant dans des artefacts de l'image et des effets « d'éblouissement ») peut être limité par les fluctuations de capteur à capteur. L'utilisation de composites piézoélectriques, par opposition à de la céramique massive, permet une fabrication collective mais suppose l'utilisation d'un préamplificateur pour chaque capteur et trouve ainsi sa limite dans la complexité de la connectique requise. En effet, les capteurs à base de céramiques piézoélectriques n'offrent pas de possibilités d'amplification ou de démodulation intégrées. Etant des dipôles électriques, le signal détecté est simplement prélevé à leurs bornes. Le traitement des signaux issus de chaque capteur nécessite un circuit de lecture par capteur. Une étape d'hybridation consistant à assembler chaque capteur à un circuit de traitement réalisé dans un matériau différent est nécessaire. Cette étape est coûteuse et difficile à mettre en œuvre.

Les fréquences en jeu dans les applications visées sont comprises entre 1 MHz et 3 MHz pour des portées comprises entre 5 m et 20 m qui sont les portées souhaitées dans le domaine de la guerre des mines. Les critères d'échantillonnage spatial d'une antenne imposent ainsi un espace entre les capteurs compris entre 750 microns et 250 microns.

Les caméras acoustiques obtenues à partir des antennes en composite piézoélectrique sont peu compactes et leur résolution est limitée. Les caméras acoustiques sont alors souvent couplées à une caméra optique. XP011450793 divulgue une antenne de réception comprenant au moins un réseau de capteurs acoustiques.

XP012152749 est un article concernant l'utilisation de transistors HEMT à base de GaN pour détecter des ondes de surface.

Un but de l'invention est de pallier au moins un des inconvénients précités.

A cet effet, l'invention a pour objet une antenne de réception pour caméra acoustique, ladite antenne de réception comprenant un réseau de capteurs acoustiques comprenant chacun un transistor à haute mobilité électronique (HEMT en référence à l'expression anglo-saxonne : « High-electron-mobility transistor ») à base de nitrure de gallium.

Le nitrure de gallium GaN et ses alliages dérivés présentent des propriétés piézoélectriques. Une variation d'une contrainte mécanique appliquée sur un empilement de couches semi-conductrices d'un transistor HEMT à base de nitrure de gallium comprenant une couche piézoélectrique à base de GaN provoque une déformation de la couche piézoélectrique qui entraine une variation de la concentration des charges dans le gaz d'électrons à l'hétérojonction ce qui provoque une variation du courant circulant entre la source et le drain. La variation du courant circulant entre drain et source est représentative de la variation de la contrainte mécanique.

L'antenne selon l'invention présente un certain nombre d'avantages. Elle peut présenter un nombre important de capteurs acoustiques du type transistor HEMT et peut être réalisée collectivement de façon aisée et peu coûteuse par les procédés de la microélectronique. On peut ainsi réaliser à moindre coûts une antenne de réception non lacunaire permettant de réaliser des mesures non ambigües.

Le fait que les capteurs de pression soient réalisés à base de transistors permet d'envisager de nombreuses possibilités pour la détection et le traitement de l'information des ondes acoustiques. Les capteurs présentent un effet d'amplification intrinsèque du à l'effet transistor. Plus le potentiel de grille appliqué augmente au delà de la tension de pincement du transistor et plus le courant entre drain et source est important. Les transistors HEMT à base de GaN ayant des gains de l'ordre d'une centaine à basse fréquence offrent l'avantage d'amplifier les signaux de façon intrinsèque, compensant leurs performances piézoélectriques plus limitées que les matériaux plus classiques du type céramiques piézoélectriques. L'amplification intégrée au capteur permet d'éviter d'avoir à coupler chaque capteur avec un étage de pré-amplification dédié ou de permettre d'utiliser des amplificateurs de performances et/ou de complexité limitées.

Le fait que les capteurs soient réalisés à base de transistors permet également la simplification des premiers étages de traitement du signal avant formation de voies, notamment la démodulation. En effet, une détection hétérodyne peut être réalisée par les différents transistors par une simple commande des électrodes de grille. Il est par exemple possible d'appliquer une tension de polarisation de grille présentant une composante continue (permettant d'obtenir l'effet transistor et l'amplification) et une composante sinusoïdale permettant d'obtenir la détection hétérodyne. La détection hétérodyne permet de réaliser une partie de la démodulation au sein même du transistor ce qui permet de limiter le débit avec lequel les circuits de traitement doivent être capables de traiter signaux issus des différents capteurs. Les signaux issus d'une détection hétérodyne peuvent être échantillonnés à une fréquence plus faible que les signaux issus d'une détection directe.

Une commande plus complexe peut également être envisagée pour cumuler des effets de démodulation et d'échantillonnage sur un bit.

L'utilisation de capteurs pouvant être directement réalisés sur substrat de silicium permet de disposer d'un potentiel important de connexions électriques. La fréquence des ondes ultrasonores étant de la classe du MHz et les fréquences intermédiaires étant encore plus basses, les interconnexions électriques ne nécessitent pas des règles d'intégration complexes. Les signaux peuvent être collectés classiquement soit en périphérie du réseau ou matrice (approche similaire aux matrices d'imageurs CMOS), soit en empilant la matrice de détection et une autre matrice assurant le traitement numérique final.

Il est par ailleurs possible de réaliser plusieurs caméras acoustiques, c'est-à-dire plusieurs réseaux de capteurs, sur un même wafer, c'est-à-dire sur un substrat commun et avec un empilement semi-conducteur commun.

En visant des fréquences centrales acoustiques de l'ordre du MHz, les dimensions des membranes nécessaires pour obtenir un échantillonnage spatial correct correspondent à la dimension de la demi-longueur d'onde du signal dans l'eau et sont de l'ordre de $300\mu m$ de rayon. Les épaisseurs de GaN nécessaire à l'obtention d'une telle fréquence de résonnance sont de l'ordre de $2\mu m$. L'utilisation de substrat silicium permet l'accès à des tailles jusqu'à 200mm avec un coût moindre avec la réalisation en parallèle de plusieurs matrices abaissant les coûts de production. Les substrats de silicium permettent en plus de profiter des sélectivités de gravure quasi-infinies entre le silicium et le GaN. Du fait de l'utilisation de techniques de la microélectronique, on peut aisément réaliser des matrices comportant une centaine de cavités par $cm^2$, chacune pouvant être recouverte d'un ou plusieurs transistors.

Il est à noter que le milieu aquatique souvent corrosif et avec des pressions ambiantes élevées constitue un environnement sévère. L'utilisation de capteurs HEMT permet d'obtenir des antennes résistantes en température et pression qui ne requièrent pas forcément une protection des capteurs, ce qui est habituellement fait par l'emploi de matériaux polymères.

L'antenne de réception présente avantageusement au moins une des caractéristiques ci-dessous prises seules ou en combinaison :

- au moins un réseau de capteurs acoustiques est un réseau bidimensionnel,
- au moins un réseau bidimensionnel est à mailles hexagonales,
- au moins un des capteurs comprend un substrat délimitant une cavité et un empilement semi-conducteur formé sur le substrat au moins en partie en regard de la cavité,
- la cavité présente une section sensiblement circulaire dans un plan perpendiculaire à une direction d'empilement z selon laquelle le substrat et l'empilement semi-conducteur sont empilés,
- au moins un des capteurs comprend un transistor comprenant une grille superposée à un contour fermé délimitant la cavité dans un plan perpendiculaire à la direction d'empilement,

- le transistor comprend en outre une première électrode formée en regard de la cavité et une deuxième électrode formée en regard d'une partie du substrat entourant la cavité dans un plan perpendiculaire à la direction d'empilement,
- la première électrode est une source du transistor et la deuxième électrode est un drain du transistor,
- la première électrode comprend un anneau formé superposé à la cavité,
- la première et la deuxième électrode et la grille sont sensiblement concentriques,
- la grille s'étend en regard de sensiblement tout le périmètre du contour,
- au moins un capteur comprend plusieurs transistors comprenant chacun une grille superposée au contour, les grilles comprennent chacune une portion d'anneau présentant une forme allongée suivant le contour, les portions d'anneau des différentes grilles s'étendant sur des portions du contour présentant sensiblement la même longueur,
- au moins un capteur comprend un transistor comprenant une source, un drain et un circuit de filtrage d'un signal mesuré entre la source et le drain, le circuit de filtrage étant au moins partiellement formé sur l'empilement semi-conducteur et/ou au moins partiellement compris dans l'empilement semi-conducteur,
- le circuit de filtrage comprend un filtre passe-bande,
- au moins un des capteurs comprend un transistor commandé pour réaliser une détection hétérodyne d'un signal acoustique,
- le transistor est commandé de sorte à réaliser une détection hétérodyne d'un signal acoustique, ledit transistor comprenant une électrode alimentée au moyen d'un oscillateur local étant un signal sinusoïdal présentant une fréquence intermédiaire prédéterminée fixe,
- l'antenne comprend deux groupes comprenant chacun au moins un transistor, et dans lequel les transistors des groupes respectifs comprennent des électrodes des transistors des deux groupes étant alimentées au moyen d'oscillateurs locaux respectifs en quadrature de phase.

L'invention se rapporte également à une antenne active comprenant une antenne d'émission acoustique apte à émettre des impulsions acoustiques et l'antenne de réception selon l'invention.

L'invention se rapporte en outre à un procédé de commande d'une antenne de réception selon l'invention, dans lequel on commande au moins un transistor de l'antenne de réception de sorte que ledit transistor réalise une détection hétérodyne d'un signal acoustique.

D'autres caractéristiques et avantages de l'invention apparaîtront à la lecture de la description détaillée qui suit, faite à titre d'exemple non limitatif et en référence aux dessins annexés dans lesquels :

- la figure 1 représente une antenne active selon l'invention,
- la figure 2 représente schématiquement en coupe un capteur de type transistor HEMT d'une antenne de réception selon l'invention,
- la figure 3 représente schématiquement en vue de dessus un réseau de capteurs d'une antenne de réception selon l'invention,
- la figure 4 représente schématiquement en vue de dessus le capteur de la figure 2,
- la figure 5 représente schématiquement une vue de dessus une variante de capteur selon l'invention,
- la figure 6 représente schématiquement en vue de dessus une deuxième variante de capteur selon l'invention,
- la figure 7 représente schématiquement en vue de dessus une troisième variante de capteur selon l'invention,
- la figure 8 représente un schéma électrique d'un circuit individuel de commande et d'un circuit individuel de filtrage d'un capteur d'une antenne selon l'invention,
- la figure 9 représente schématiquement en vue de dessus un exemple d'implémentation des circuits individuels de commande et de filtrage dans un réseau de capteurs d'une antenne selon l'invention,
- la figure 10 représente schématiquement en vue de côté une portion d'une antenne comprenant un réseau de capteurs selon la figure 9 ;
- la figure 11 représente schématiquement en coupe une variante d'un capteur de type transistor HEMT d'une antenne de réception selon l'invention.

D'une figure à l'autre, les mêmes éléments sont repérés par les mêmes références.

L'invention concerne une antenne de réception acoustique, permettant de détecter des ondes acoustiques. Cette antenne est destinée à être intégrée dans une caméra acoustique. Elle concerne les antennes de réception pour caméras acoustiques passives (comprenant uniquement une antenne de réception) ou actives (comprenant une antenne d'émission d'ondes acoustiques et une antenne de réception d'ondes acoustiques recevant des signaux acoustiques issus de la réflexion d'ondes acoustiques émises par l'antenne d'émission).

Les caméras acoustiques ont pour fonction de réaliser des images d'une scène imagée en milieu liquide à partir de détection, par une antenne de réception acoustique, d'ondes acoustiques ou échos provenant d'objets ou cibles présents dans ce milieu liquide.

Les applications possibles de l'antenne de réception sont par exemple la surveillance de bâtiments ou d'édifices ayant des parties immergées (coques de navire, digues, barrages, exploration de fonds marins pour des fouilles archéologiques...), la détection de mines dans le domaine militaire, le pilotage d'engins sous-marins en eaux turbides pour des applications de détection de mine ou de prospection et d'exploitation pétrolière, les instruments d'échographie médicaux (caméras actives), l'échographie pour les applications industrielles telles que le contrôle non destructif.

Pour les échographies médicales les fréquences utilisées s'échelonnent de 3,75MHz à 18MHz du fait des résolutions nécessaires en anatomie. L'invention permet d'obtenir un rapport coût performance intéressant dans ce domaine.

Dans le domaine de la guerre des mines, les ondes acoustiques en jeu sont des ultrasons de fréquence comprise entre 300 kHz et 3 MHz.

L'antenne de réception est avantageusement apte à détecter des ondes ultrasonores. Avantageusement, l'antenne de réception est apte à détecter des ondes ultrasonores de fréquence comprise entre 1 et 10 MHz qui sont les ondes ultrasonores de diagnostique.

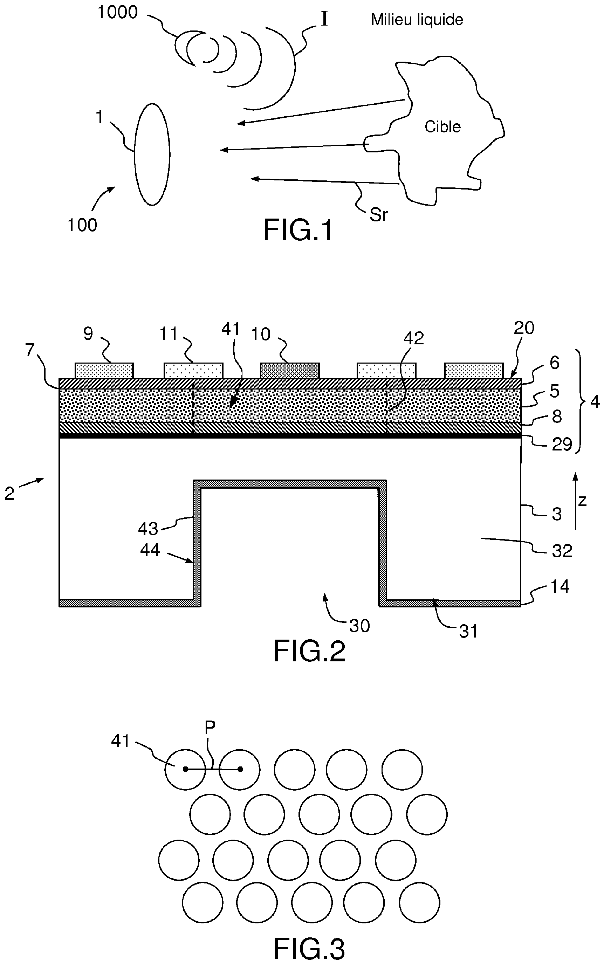

L'antenne selon l'invention est apte à être intégrée dans une antenne active telle que représentée sur la figure 1 et pouvant être utilisée dans une caméra acoustique. Une telle antenne active 100 comprend une antenne de réception 1 selon l'invention et une antenne d'émission 1000 apte à émettre une impulsion acoustique I. L'antenne de réception 1 détecte un signal réfléchi provenant de la réflexion, sur une cible, d'une impulsion acoustique émise par l'antenne d'émission 1000. Le signal réfléchi Sr est une onde de pression qui est détectée par les capteurs acoustiques.

L'antenne de réception selon l'invention comprend un réseau de capteurs acoustiques 2 comprenant chacun au moins un transistor à haute mobilité électronique (HEMT en référence à l'expression anglo-saxonne : « High-electron-mobility transistor ») à base de nitrure de gallium GaN. Le terme HEMT est compris au sens large dans la mesure où il couvre également les transistors MIS-HEMT ou MOS-HEMT.

Avantageusement, tous les capteurs HEMT sont identiques ce qui permet d'obtenir une sensibilité uniforme des capteurs qui permet de minimiser les lobes secondaires lors de la formation de voies. En variante, tous les capteurs HEMT ne sont pas identiques.

La figure 2, représente schématiquement une vue en coupe selon un plan perpendiculaire au plan P d'un exemple de capteur acoustique 2 du type capteur HEMT. Sur cette figure, pour plus de clarté, les interconnexions n'ont pas été représentées.

Le capteur comprend un substrat 3 et un empilement semi-conducteur 4, comprenant plusieurs couches semi-conductrices, formé sur le substrat 3. Autrement dit, l'empilement semi-conducteur 4 et le substrat 3 sont empilés selon une direction d'empilement z.

Le substrat 3 est en matériau semi-conducteur ou isolant. Il s'agit par exemple d'un substrat en carbure de silicium SiC ou silicium Si ou de saphir.

Le capteur 2 comprend avantageusement, mais non nécessairement, une couche de contact 14 formée sur une surface du substrat 3 opposée à l'empilement semi-conducteur 4. Cette couche est de préférence métallique et peut avoir une fonction d'isolation électrique et de protection du capteur.

Un blindage électrique, destiné à isoler le capteur de perturbations électriques pouvant être présentes dans l'eau au voisinage de l'équipement, peut être réalisé. Ce blindage peut être réalisé en incluant une couche conductrice électriquement - métallique par exemple - dans la couche 14.

L'empilement semi-conducteur 4 est à base de GaN, il comprend une couche 5 d'un premier matériau semi-conducteur présentant une large bande interdite (dit matériau à grand gap ou « wide bandgap » en terminologie anglo-saxonne), appelée couche tampon, et une couche barrière 6 piézoélectrique et semi-conductrice à base de GaN présentant une bande interdite (ou « band gap » en terminologie anglo-saxonne) plus large que celle de la couche tampon 5. A l'hétérojonction entre la couche tampon 5 et la couche barrière 6 se crée un gaz d'électrons bidimensionnel 7 situé dans la couche 5 à proximité de l'hétérojonction et s'étendant continûment dans un plan perpendiculaire à l'axe z. L'empilement semi-conducteur 4 comprend avantageusement une couche d'interface 8 permettant d'accommoder les différences de mailles cristallines et d'expansion thermique entre le substrat 3 et la couche tampon 5 et la couche barrière 6. Cette couche d'interface peut par exemple être composée d'une alternance de couches $Al_xGa_{1-x}N$/GaN avec x variable. L'empilement 4 comprend en outre avantageusement une couche de nucléation 29 interposée entre la couche d'interface 8 et le substrat 3, permettant la croissance du matériau formant les couches 5 et 6 sur le substrat 3. La couche de nucléation peut par exemple être composée de Nitrure d'Aluminium (AlN).Les différentes couches sont généralement formées par épitaxie en phase vapeur aux organométalliques (MOCVD acronyme de l'expression anglo-saxonne « metalorganic vapor phase epitaxy »), tout en sachant qu'une approche par épitaxie par jets moléculaires (MBE acronyme anglais Molecular Beam Epitaxy) est envisageable. Il peut néanmoins être également envisagé de réaliser les couches 8 et 29 par des techniques de collage entre différents substrats.

La couche tampon 5 est une couche de nitrure de gallium GaN ou une couche comprenant au moins un alliage de nitrure de gallium (InAlGaN, AlGaN, InGaN, homogène ou non). La couche barrière 6 est par exemple une couche à base d'au moins un alliage de nitrure de gallium et/ou de nitrure d'aluminium et/ou de nitrure d'indium et d'aluminium. Elle est par exemple en nitrure d'aluminium-gallium AlGaN, en nitrure d'indium gallium et Aluminium InGaAlN, ou en nitrure d'aluminium AlN.

Chaque transistor HEMT comprend un ensemble d'électrodes. L'ensemble d'électrodes comprend un drain 9, une source 10 et une grille 11 formées sur la face supérieure 20 de l'empilement semi-conducteur 4. La face supérieure 20 de l'empilement semi-conducteur est la face de l'empilement 4 opposée au substrat 3, selon l'axe z. La grille 11 est interposée entre les deux contacts ohmiques 9, 10. Les contacts ohmiques comprennent un contact de drain 9 et un contact de source 10. La conductance entre l'électrode de source 10, et l'électrode de drain 9 est modulée par l'action électrostatique de la grille 11 qui est par exemple de type Schottky, qui fait office d'électrode de commande.

La couche semi-conductrice 6 présentant des propriétés piézoélectriques, le courant ou la tension mesurée entre drain 9 et source 10 est représentatif(ve) de la pression appliquée sur l'empilement semi-conducteur 4. L'empilement semi-conducteur est déformable sous l'effet d'une variation de pression. Une variation de cette pression entraîne une déformation de la couche piézoélectrique 6 qui entraîne une variation de la concentration des charges dans le gaz d'électrons provoquant une variation de la conductance entre ces électrodes et une variation du courant ou circulant entre drain 9 et source 10 ou de la tension mesurée entre ces deux électrodes.

Avantageusement, l'empilement semi-conducteur 4 et le substrat 3 sont configurés de façon que le capteur soit un capteur acoustique, c'est-à-dire apte à détecter des ondes acoustiques. De préférence le capteur est un capteur d'ondes ultrasonores.

Le substrat 3 délimite par exemple avantageusement, mais non nécessairement, une cavité 30. Dans l'exemple non limitatif de la figure 2, la cavité 30 est distante de l'empilement semi-conducteur 4 selon l'axe z. Autrement dit, elle n'est pas creusée jusqu'à l'empilement semi-conducteur 4. Cela permet d'ajuster la fréquence de résonance du capteur en fonction de la profondeur de la cavité, c'est-à-dire sa dimension selon l'axe z. L'empilement semi-conducteur 4 recouvre complètement la cavité 30. Dans la suite du texte, on appelle membrane 41, la partie de l'empilement semi-conducteur 4 qui est superposée à la cavité 30, c'est-à-dire qui s'étend en regard de la cavité. La membrane 41 est délimitée par un contour 42 représenté en traits pointillés sur la figure 2.

La présence d'une cavité permet d'obtenir facilement une membrane 41 déformable sous l'effet de faibles pressions du type ondes acoustiques. Un bon dimensionnement de l'empilement 4 et du substrat permet d'obtenir une membrane 41 vibrante dont la fréquence de résonnance est intéressante pour les applications marines ou échographiques. Des fréquences de résonances de l'ordre du MHz sont accessibles, dans l'air, en faisant des membranes de GaN de l'ordre de 3 $\mu$m d'épaisseur (dans l'air) ou 6 $\mu$m, dans l'eau, sur des cavités d'une centaine de $\mu$m de diamètre. Avantageusement, le capteur 2 est configuré pour que la fréquence de résonnance de la membrane vibrante 41 soit comprise dans la bande de fréquences de l'impulsion émise par la source 1000 de préférence à la fréquence porteuse que nous définirons plus tard.

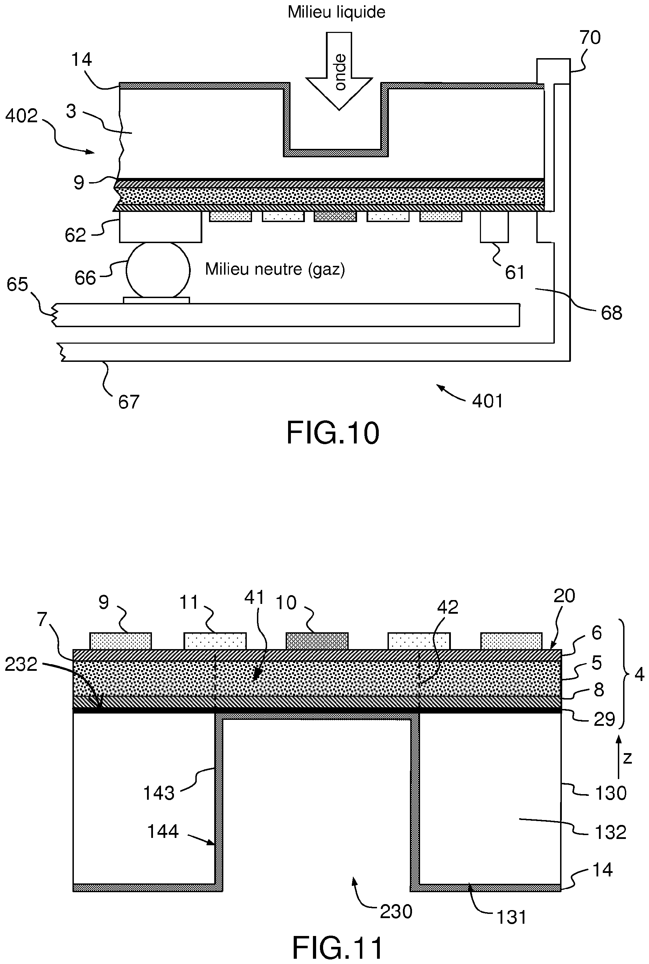

Sur la figure 11, on a représenté une variante de la figure 2. Cette variante diffère de la figure 2 par le substrat 130. Ce substrat 130 diffère de celui de la figure 2 en ce qu'il délimite une cavité 230 qui débouche sur la face 232 du substrat 230 qui fait face à l'empilement semi-conducteur 4. Cette cavité 230 est délimitée par une paroi 144 qui présente, dans un plan perpendiculaire à l'axe z, une section en forme d'une courbe fermée, appelée contour 143. Le substrat 130 comprend une partie 132 entourant la cavité 230 et plus précisément la paroi 144. Sur la réalisation de la figure 11, la membrane 41 ferme la cavité 230.

La membrane 41 est sensiblement plane, elle s'étend principalement selon un plan perpendiculaire à la direction d'empilement z. Comme visible sur la figure 2, la couche de contact 14 recouvre avantageusement la surface du substrat délimitant la cavité et la face de la membrane 41 fermant la cavité 30, lorsque la cavité 30 débouche sur la membrane 41 (comme sur la figure 11).

Sur les réalisations non limitatives des figures 2 et 11, la cavité 30 ou 230 débouche sur la face 31 ou 131 du substrat 3 ou 130 qui est opposée à l'empilement semi-conducteur 4. Cela permet de bien maitriser les dimensions des cavités et d'obtenir facilement des capteurs identiques en tirant partie des sélectivités de gravure existante entre le substrat 3 qui serait en silicium par exemple, et les alliages GaN tant en gravure chimique ou plasma. Le fait que la cavité débouche sur la face du substrat faisant face à l'empilement 4, comme sur la figure 11, permet aussi d'obtenir cet avantage.

L'antenne de réception 1 comprend un réseau bidimensionnel de capteurs 2. Autrement dit, les capteurs sont répartis selon un maillage plan, c'est-à-dire dans un plan. Autrement dit, les membranes 41 des différents capteurs sont réparties dans un plan.

L'utilisation d'une matrice bidimensionnelle de capteurs acoustiques permet de générer des images tridimensionnelles sans avoir à déplacer la matrice afin de lui faire balayer l'espace contrairement aux agencements monodimensionnels de capteurs (barrettes linéaires de capteurs par exemple).

Avantageusement, comme représenté sur la figure 3, les capteurs 2 de l'antenne de réception 1 forment un réseau bidimensionnel à mailles hexagonales. Autrement dit, si on recouvre une surface plane d'hexagones contigus, dans lequel, deux hexagones contigus présentent deux sommets en commun, alors les sommets des hexagones sont occupés par les différents capteurs. Dans l'exemple particulier où les capteurs présentent une membrane vibrante, comme c'est le cas sur la figure 2, les membranes 41 des capteurs forment un réseau bidimensionnel à mailles hexagonales comme représenté sur la figure 3. Les centres des membranes occupent les sommets des hexagones du maillage. Cette topologie permet maximiser la surface sensible et de limiter des phénomènes de remonter de lobes secondaires dégradant le rapport signal à bruit. La résolution de ce type d'antenne est maximale.

En variante, les capteurs sont agencés en réseau bidimensionnel à mailles carrées.

En variante, le réseau de capteurs peut être monodimensionnel. Par réseau monodimensionnel, on entend un réseau dans lequel les capteurs sont arrangés en ligne.

L'antenne peut en variante comprendre plusieurs réseaux de capteurs, chaque réseau pouvant par exemple être monodimensionnel ou bidimensionnel

Les différents capteurs 2 sont avantageusement, mais non nécessairement, réalisés sur un substrat commun et comprennent avantageusement, mais non nécessairement un empilement semi-conducteur 4 commun. La matrice de capteurs ou réseau de capteurs est alors réalisé aisément de façon collective par les méthodes de la microélectronique.

Comme visible sur la figure 2, la cavité 30 est délimitée et entourée par une paroi 44 qui présente une section présentant une forme de courbe fermée appelée contour 43 dans un plan perpendiculaire à l'axe z.

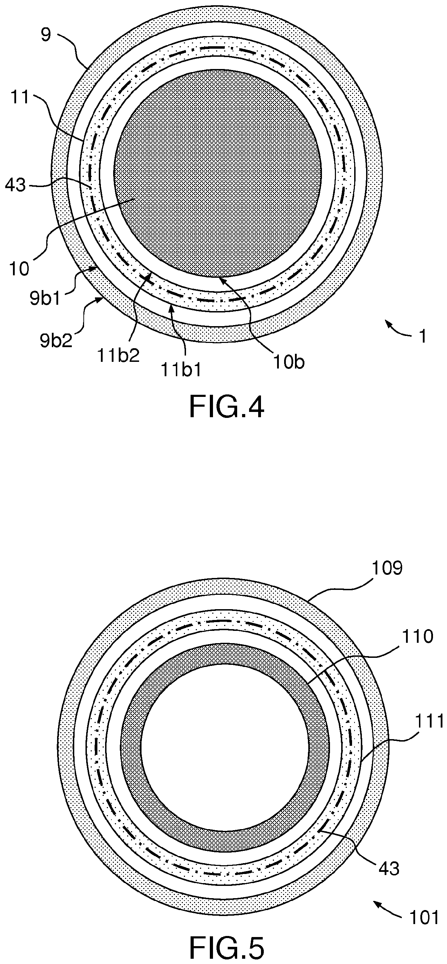

Sur la figure 4, on a représenté une vue de dessus de la figure 2. Pour plus de clarté, les interconnexions de ce capteur n'ont pas été représentées. La ligne pointillée représente le contour 43..

Avantageusement, comme visible sur la figure 4, la courbe 43 est circulaire. Autrement dit, la cavité 30 présente une section sensiblement circulaire dans un plan perpendiculaire à la direction d'empilement z. La membrane vibrante 41 présente une forme de disque. Les contraintes mécaniques ainsi appliquées à la membrane 41 sont homogènes. Cela permet de limiter les risques de fissuration de la membrane ou des décollements des électrodes. En variante, la forme de la section de la cavité est différente. Elle peut être triangulaire ou quadrangulaire, par exemple rectangulaire, avantageusement carrée, à bords arrondis ou droits.

Avantageusement, la cavité 30 présente une forme d'un cylindre d'axe z. En variante, la cavité présente une forme d'une portion de cône d'axe z.

Sur la réalisation des figures 2, 11 et 4, chaque capteur 2 comprend un unique transistor HEMT. Autrement dit, il comprend une seule grille 11 et une seule paire de contacts ohmiques 9, 10. Cela permet une implantation compacte du capteur. En variante, au moins un capteur ou de préférence chaque capteur comprend plusieurs transistors. Il comprend donc plusieurs grilles et plusieurs drains et/ou sources, un contact ohmique pouvant être commun à plusieurs transistors. Il peut aussi comprendre plusieurs paires de contacts ohmiques et une grille commune à plusieurs transistors.

Chaque électrode est continue.

Avantageusement, comme cela est représenté sur la figure 4, la grille 11 est en partie superposée à la cavité 30, c'est-à-dire en regard de la cavité 30, et en partie superposée à une zone du substrat entourant la cavité dans un plan perpendiculaire à la direction d'empilement z. Autrement dit, la grille 11 est en partie située en regard de la cavité 30 et en regard d'une zone 32 du substrat entourant la cavité 30 et plus précisément la paroi 44. La zone 32 entoure la cavité dans un plan perpendiculaire à l'axe z. La grille 11 qui est continue est alors superposée au contour 43. Cela permet d'obtenir un capteur présentant une bonne sensibilité car les contraintes les plus importantes exercées sur l'empilement semi-conducteur 4, et donc sur la couche piézoélectrique 6, apparaissent au bord de la cavité 30. C'est donc à cet endroit que l'effet piézoélectrique est maximal et que la modulation du courant est la plus importante.

Sur la réalisation de la figure 4, le drain 9 est superposé à une partie 32 du substrat entourant la cavité 30 dans un plan perpendiculaire à l'axe z et la source 10 est superposée à la cavité 30. Autrement dit, sur l'exemple de la figure 4, la source 9 est formée en regard de la cavité 3 et le drain 9 est formé en regard de la partie 32 du substrat qui entoure la cavité 30. Avantageusement, le drain 9 est uniquement en regard de la zone 32 et la source 10 est formée uniquement ou essentiellement en regard de la cavité 30, c'est-à-dire en dehors d'une zone en regard de la zone 32.

En variante, les positions du drain 9 et de la source 10 sont inversées.

Sur la réalisation de la figure 4, la grille 11 présente une forme d'anneau. La grille 11 s'étend en regard de toute la longueur du contour 43, c'est-à-dire en regard de tout le périmètre du contour 43 de la cavité 30. La sensibilité du transistor est alors maximale car la configuration de la grille permet d'obtenir un signal de mesure intégré sur l'ensemble du contour. Ce mode de réalisation permet aussi d'assurer la continuité physique de la grille qui présente la forme d'une courbe fermée.

Le drain 9 présente une forme d'anneau.

En variante, une portion de la grille et/ou une portion du drain présente les caractéristiques ci-dessus. Par exemple, la grille peut présenter une forme d'une portion d'anneau s'étendant sensiblement en regard de tout le périmètre du contour 43, c'est-à-dire en regard de tout le périmètre de la cavité 30. Par sensiblement on entend que l'écart entre les deux extrémités de la grille permet juste de laisser passer une interconnexion vers l'électrode centrale ou une patte de l'électrode centrale destinée à être reliée à une interconnexion. La grille peut aussi comprendre une portion d'anneau et une ou plusieurs pattes reliées à l'anneau.

Le drain 9 pourrait présenter une forme d'une portion d'anneau sensiblement complète d'un anneau de sorte à permettre de laisser passer une interconnexion vers la grille et/ou une interconnexion vers la source ou une patte de la grille et/ou une patte de la source destinées à être reliées à des interconnexions. Il pourrait comprendre une portion d'anneau et une ou plusieurs pattes reliées à l'anneau.

Sur la réalisation de la figure 4, la source 10 est pleine, elle présente une forme de disque. En variante, la source 10 présente une portion centrale pleine formée en regard de la cavité 30. Cette portion peut présenter une forme de disque.

Dans une variante représentée sur la figure 5, la source 110 du capteur 101 est évidée ce qui permet d'optimiser la résonnance de la membrane 41. Autrement dit, elle présente une forme d'anneau. La forme du drain 109 et de la grille 111 sont inchangées par rapport à la figure 4.

En variante, une portion de la source 10 présente les caractéristiques ci-dessus. La source comprend par exemple à une portion centrale pleine ou en anneau et une patte reliée au disque ou à l'anneau.

Sur la réalisation de la figure 4, les électrodes 9, 10, 11 sont concentriques. Elles sont également concentriques à la courbe 43. Plus généralement les électrodes sont avantageusement concentriques. Autrement dit, elles forment des anneaux ou portions d'anneaux qui présentent avantageusement un centre situé sur un même axe parallèle à l'axe d'empilement.

Avantageusement, les électrodes 9, 10, 11 comprennent chacune au moins une bordure 9b1, 9b2, 10b, 11b1, 11b2 s'étendant sensiblement parallèlement au contour 43 dans un plan perpendiculaire à l'axe z. Dans ce mode de réalisation, le drain 9 et la grille 11 comprennent chacun deux contours 9b1, 9b2, et respectivement 11b1, 11b2 s'étendant sensiblement parallèlement au contour 43 et la source 10 en comprend un seul 10b car elle est pleine. Par conséquent, dans la réalisation figure 4 dans laquelle la cavité présente une section circulaire 30 dans un plan perpendiculaire à l'axe z, la grille 11 présente une forme d'anneau circulaire et le drain 9 présente une forme d'anneau circulaire.

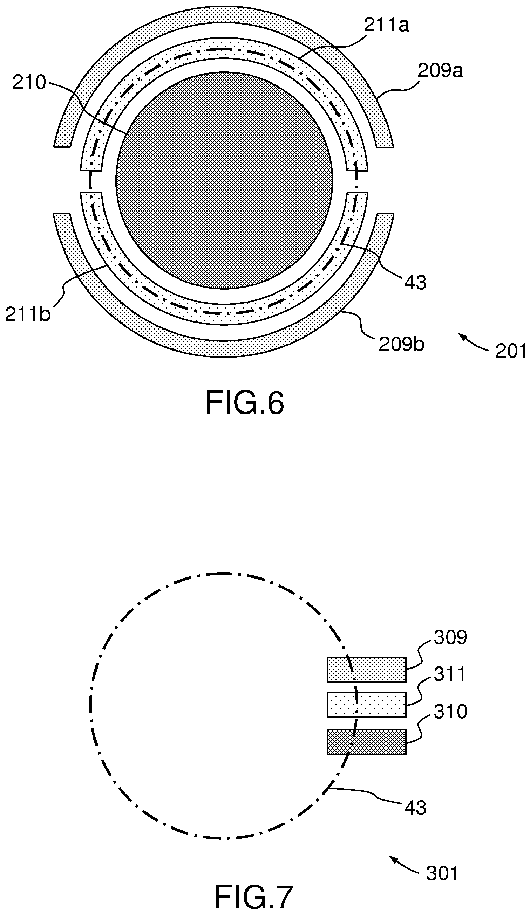

Dans une variante de réalisation représentée sur la figure 6, on a représenté une vue de dessus d'un capteur 201 différent de celui des figures 4 et 5 en ce qu'il comprend deux drains 209a, 209b, deux grilles 211a, 211b et une source 210.

Le capteur comprend ainsi deux transistors comprenant chacun un drain 209a, et respectivement 209b, une grille 211a, et respectivement 211b et une source commune 210 dont la forme est inchangée par rapport à la figure 4.

Sur la réalisation de la figure 6, chaque grille 211a, 211b suit la forme d'une portion du contour 43. Chaque portion d'anneau s'étend sensiblement en regard de la moitié du périmètre de la ligne 43. Cette topologie permet de limiter les résistances d'accès des différentes grilles mais au prix d'une intégration moins aisée dans une matrice de capteurs car des connexions doivent être réalisées vers chaque grille. Chaque drain 209a, 209b présente la forme d'une portion d'anneau formé sur une portion de l'empilement semi-conducteur extérieur à la membrane 41. Les portions d'anneaux 209a, 209b présentent la forme d'une portion d'un anneau circulaire car la cavité 30 présente une section circulaire. Chaque portion d'anneau est sensiblement un demi-cercle. En variante, une portion de la grille et/ou une portion du drain présente les caractéristiques précédentes. La source et/ou le drain peut comprendre une portion présentant une forme d'une portion d'anneau et une patte reliée à la portion d'anneau correspondant.

De manière plus générale, le capteur peut comprendre plusieurs transistors comprenant chacun une grille superposée au contour 43, les grilles comprennent chacune une portion d'anneau présentant une forme allongée suivant le contour 43, c'est-à-dire suivant la courbure du contour. Les portions d'anneau des différentes grilles s'étendent sur des portions du contour de même longueur.

Sur la réalisation de la figure 7, le capteur 301 comprend une source 310, une grille 311 et un drain 309. Chacune des électrodes est formée en partie en regard de la cavité 30 et en partie en regard de la zone 32 du substrat 3 qui entoure la cavité 30. Dans le cas où la membrane ferme la cavité 30, comme sur la figure 11, chaque électrode est formée en partie sur la membrane 41 et en partie sur une partie de l'empilement semi-conducteur 4 entourant la membrane. Ceci permet d'être sensible aux différents modes de résonance de la membrane 41 pour une plage de fréquences plus étendue. En revanche la sensibilité à la fréquence fondamentale est plus faible. Ces électrodes 309, 310, 311 présentent une forme allongée et sont superposées au contour dans le sens de leurs largeurs respectives. Le capteur peut comprendre plusieurs ensembles d'électrodes comprenant chacun une grille, un drain et une source de ce type, répartis le long du contour 43.

Le compromis entre, résistance d'accès, résistance mécanique et sensibilité détermine la meilleure topologie du capteur en fonction des applications visées.

La disposition des figures 4 à 7 est applicable à la réalisation de la figure 11. Le contour 43 serait alors remplacé par le contour 143 sur les figures.

L'antenne de réception selon l'invention est avantageusement utilisée dans une antenne active 100 représentée sur la figure 1 pouvant être utilisée dans une caméra acoustique. Cette antenne active 100 comprend une antenne d'émission 1000 apte à émettre une impulsion acoustique à une fréquence porteuse f0 ou dans une bande de fréquence centrée autour d'une fréquence porteuse f0 typiquement comprise entre 1MHz et 3 MHz soit une longueur d'onde λ de 0,15cm à 0,05cm pour une vitesse du son c dans l'eau de 1500m/s.

L'impulsion acoustique émise par l'antenne d'émission 1000 s'étale par exemple sur une durée d'une dizaine de $\mu s$ correspondant à une largeur de bande de fréquence $\Delta f$ de l'ordre de 100 kHz (ou plus). La résolution accessible du fait de ce type de signal est typiquement de la vitesse du son c divisée par la bande passante $\Delta f$ soit $1500/10^5 = 0,015m = 1,5$ cm). Alternativement, la source peut émettre une impulsion acoustique modulée en fréquence avec une largeur de bande $\Delta f$ (égale à la déviation en fréquence) centrée sur la fréquence porteuse f0 et émise sur une durée $T \gg 1/ \Delta f$ de manière à obtenir par corrélation, lors du traitement du signal généré par le capteur, un gain de traitement $G = T^* \Delta f$. L'antenne de réception détecte un signal réfléchi provenant de la réflexion, sur une cible, d'une impulsion acoustique émise par l'antenne d'émission 1000. Le signal réfléchi est une onde de pression qui est détectée par les capteurs acoustiques. Le signal réfléchi module, par effet piézoélectrique, un signal électrique mesuré entre le drain et la source d'un transistor HEMT. Ce signal est alors représentatif du signal réfléchi.

Afin que le réseau de capteurs permette une formation de voies correcte en site et en gisement, il est nécessaire que la matrice de détection présente un pas p sensiblement égal à λ/2 ; soit pour une porteuse de 3MHz, un pas p de 250μm. Le pas p représenté sur la figure 3 est la distance entre les capteurs dans le réseau.

L'obtention d'une résolution horizontale et verticale de quelques centimètres à 5 m de distance requiert l'utilisation de matrices comportant plusieurs centaines de lignes et plusieurs centaines de colonnes. Afin de faciliter la formation de voies par calcul, les puissances de 2 seront privilégiées afin de pouvoir mettre en oeuvre des algorithmes de type FFT. La taille typique de matrices envisageable est de 256 x 256 éléments soit 64 mm x 64 mm ce qui est une dimension compatible de la taille de plaques GaN/Si.

Du fait de la propagation de l'onde sonore dans l'eau, le signal émis par l'antenne d'émission sur une cible située à 5m met 6,6 ms pour faire l'aller-retour. Par conséquent, l'enjeu est de reconstituer une image à partir de tous les éléments de la matrice (typiquement 256x256 éléments soit 65536 éléments) chacun collectant un signal autour de 3 MHz pendant 6,6 ms ce qui requiert de collecter au minimum $2 * 3.10^{6} * 6.6.10^{-3}$ = 39600 échantillons. Chaque image demande donc de traiter 2,6 milliards d'échantillons et ce 10 fois par seconde pour obtenir une bonne fluidité des images. Il est alors nécessaire de minimiser la complexité du traitement du signal en sortie des capteurs.

Ainsi, le signal réfléchi qui module le signal mesuré entre le drain et la source présente une fréquence porteuse fp sensiblement égale à la fréquence porteuse f0 de l'impulsion acoustique qui est très élevée typiquement comprise entre 1MHz et 3 MHz sur une largeur de fréquences de quelques centaines de kilohertz. Le traitement du signal mesuré entre le drain et la source à l'extérieur de l'antenne de réception nécessite un échantillonnage de ce signal à un débit très élevé, typiquement de l'ordre de 10Mbits par seconde pour un capteur et soit de 40 GBits par seconde pour une matrice de 4000 capteurs.

L'intérêt d'utiliser des capteurs comprenant des transistors HEMT à base de GaN provient de la possibilité de réaliser une détection hétérodyne et ainsi de démoduler le signal reçu à proximité des capteurs de pression. La technologie des capteurs HEMT permet de réaliser tous les composants passifs et des composants actifs pouvant réaliser des fonctions d'amplification, de démodulation sur l'empilement semi-conducteur et/ou en partie dans l'empilement semi-conducteur à proximité des transistors. Les besoins en termes de débit d'échantillonnage sont alors réduits. La fonction d'échantillonneur bloqueur peut également être réalisée sur l'empilement semi-conducteur et/ou en partie dans l'empilement semi-conducteur à proximité des transistors.

Avantageusement, au moins un des capteurs et de préférence tous les capteurs est (sont) commandé(s) de façon à réaliser une détection hétérodyne d'un signal acoustique.

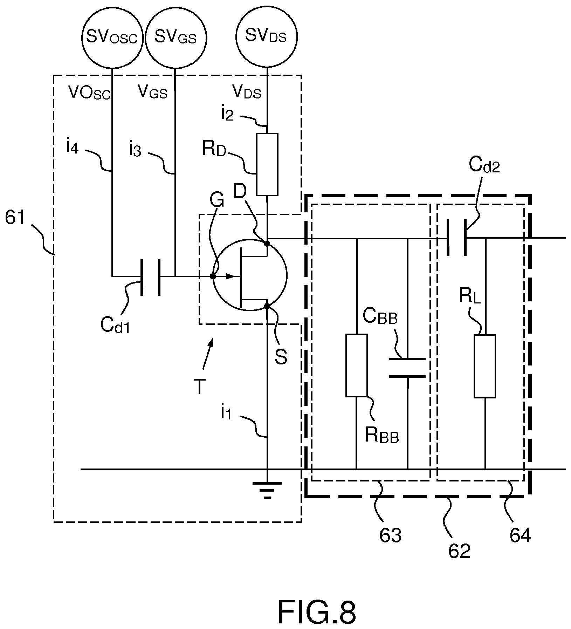

A cet effet, l'antenne de réception comprend des circuits de commande individuels pour chaque capteur (ou un circuit de commande individuel pour au moins un capteur). On a représenté, sur la figure 8, un schéma électrique d'un exemple non limitatif de circuit de commande 61 d'un capteur de l'antenne selon l'invention comprenant un transistor T comprenant une source S, un drain D et une grille G.

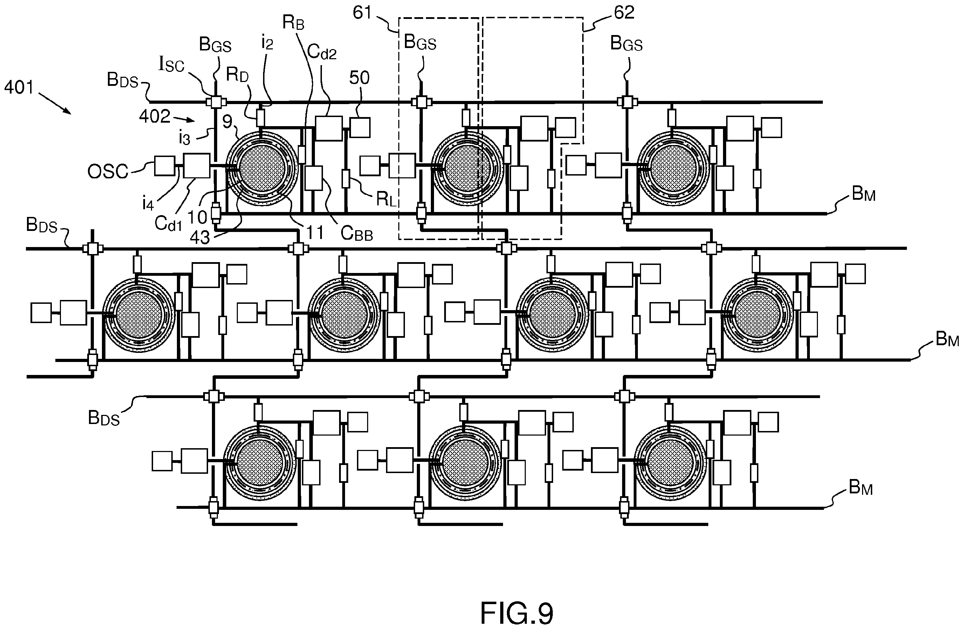

Le circuit de commande individuel 61 est un circuit d'interconnexion individuel comprenant une interconnexion électrique i1 reliant électriquement la source S à une masse. En variante, la source S peut être reliée à un potentiel de référence. L'antenne comprend alors un générateur configuré pour générer le potentiel de référence et éventuellement un bus véhiculant le signal de référence. La source S peut être reliée à un potentiel de référence ou à la masse via une résistance non représentée. Le circuit de commande individuel 61 comprend également une deuxième interconnexion i2 reliant électriquement le drain D à un potentiel de drain $V_{DS}$, éventuellement via une résistance $R_D$. Le circuit d'interconnexion individuel comprend également une troisième interconnexion i3 reliant électriquement la grille G à un potentiel de polarisation de la grille $V_{GS}$ qui est continu, éventuellement via une résistance qui n'est pas représentée, et une quatrième interconnexion reliant électriquement la grille G à un potentiel Vosc d'un signal d'oscillation local de façon que ledit signal d'oscillation local module le potentiel de polarisation de la grille, de préférence via une capacité de découplage $C_{d1}$. L'antenne comprend également avantageusement une première source de tension $SV_{GS}$ configurée pour générer le potentiel de polarisation de grille continu et éventuellement un bus $B_{GS}$ véhiculant ledit potentiel représenté sur la figure 9, une deuxième source de tension $SV_{DS}$ générant le potentiel de drain continu et éventuellement un bus véhiculant ledit potentiel $B_{DS}$ et une source de tension $SV_{osc}$ générant le signal d'oscillation local.

Le signal d'oscillation local est un signal sinusoïdal présentant une fréquence dite fréquence intermédiaire fosc. Par conséquent, le potentiel appliqué à la grille G est la somme d'un signal sinusoïdal à la fréquence intermédiaire et du potentiel de polarisation. Le transistor T a une fonction de mélangeur. Le signal électrique généré par le transistor T entre drain D et source S est le résultat d'un mélange entre le signal d'oscillation local et le signal électrique généré par effet piézoélectrique sous l'effet du signal acoustique réfléchi. L'oscillateur local permet d'effectuer une transposition en fréquence du signal acoustique détecté par le transistor T.

Le transistor T réalise donc une détection hétérodyne d'un signal acoustique en produisant deux signaux à des fréquences dites hétérodynes.

Le signal électrique résultant de ce mélange se décompose en deux nouveaux signaux à des fréquences dites hétérodynes, le premier à une fréquence fp+fosc et le deuxième à une fréquence fp-fosc où fp est la fréquence de porteuse du signal réfléchi qui est proche de la fréquence de porteuse f0 de l'impulsion acoustique émise par l'antenne d'émission. Cette décomposition ou transposition en fréquence permet l'extraction de l'information contenue dans le signal acoustique réfléchi à une fréquence fp-fosc inférieure à la fréquence fp. Autrement dit, le signal acoustique mesuré est en partie démodulé au sein du transistor.

Avantageusement, dans le cas d'une antenne active, le signal d'oscillation local est un signal sinusoïdal émis à une fréquence comprise dans la bande d'émission de l'antenne d'émission, par exemple à la fréquence fosc. Cela permet d'obtenir un signal démodulé en bande de base.

Avantageusement, l'antenne comprend des circuits individuels 62 pour chaque capteur ou au moins un circuit de commande individuel pour un capteur.

Avantageusement, le circuit de filtrage individuel 62 filtre un signal mesuré entre le drain et la source du transistor considéré permettant d'obtenir un signal démodulé. Autrement dit, le signal obtenu est ainsi démodulé avant de réaliser l'échantillonnage qui peut alors être réalisé avec un débit très faible.

Avantageusement, ce circuit de filtrage 62 est du type passe-bande ». Il comprend par exemple un circuit passe-bas 63 comprenant par exemple un condensateur $C_{BB}$ en parallèle avec une résistance $R_{BB}$. Le filtre passe bande 63, 64 laisse avantageusement passer uniquement les fréquences comprises entre (fp-fosc)-$\Delta f/2$ et (fp-fosc)+$\Delta f/2$.

Ce circuit de filtrage 62 comprend avantageusement, un filtre passe haut 64 par exemple sous forme d'un circuit RC comprenant une résistance RL et un condensateur Cd2 permettant de supprimer la partie continue du signal de sortie du circuit détecteur d'enveloppe. Le signal démodulé obtenu en sortie du circuit de filtrage 62 présente alors une bande passante équivalente à l'impulsion émise par la source mais ce signal est centré autour de fp-fosc. Autrement dit, le signal est démodulé autour de fp-fosc. Le débit nécessaire pour échantillonner le signal est alors nettement plus faible. Lorsque fosc = fp, le signal est démodulé en bande de base. En variante, il peut être intéressant de choisir fosc légèrement inférieur à la fréquence minimale du signal émis fp-$\Delta f/2$ lorsqu'on utilise des capteurs circulaires.

Avantageusement, les circuits de commande et de filtrage individuels sont formés à partir de l'empilement semi-conducteur. Autrement dit, il comprend au moins un composant et/ou au moins une interconnexion formée sur l'empilement semi-conducteur et/ou au moins un composant et /ou au moins une interconnexion au moins partiellement compris dans l'empilement semi-conducteur. Par exemple, la capacité $C_{BB}$ peut être une capacité utilisant un dépôt d'oxyde et un contact semi-conducteur fortement dopé présent dans la couche barrière.

Sur la figure 9, on a représenté un exemple d'implémentation des circuits de commande individuels pour un réseau 401 de capteurs 402 identiques à mailles hexagonales comprenant chacun un transistor HEMT comprenant un drain 9, une source 10 et une grille 11 comme représentés sur la figure 3. Les circuits de commande et de filtrage 61, 62 sont disposés entre les capteurs du réseau de capteurs. La sortie du signal de filtrage est disponible sur un plot de sortie SO. Certains croisements d'interconnexions se font sans contact au moyen de plots de croisement sans contact lsc. Chaque capteur est relié à un bus véhiculant le potentiel de drain $B_{DS}$, un bus relié à la masse $B_M$ et un bus véhiculant le potentiel de polarisation $B_{GS}$ ainsi qu'à un plot OSC sur lequel est appliqué l'oscillateur local. Les interconnexions entre les éléments sont représentées en traits pleins. Les capteurs sont avantageusement formés sur un même substrat et à partir d'un même empilement semi-conducteur.

Chaque circuit de filtrage individuel 62 peut également comprendre un échantillonneur permettant d'échantillonner le signal mesuré entre le drain et la source. Cet échantillonneur est avantageusement disposé en sortie du filtre passe-haut. Le signal est ainsi avantageusement numérisé avant transmission à un circuit de traitement centralisé qui traite les signaux issus de tous les transistors ou capteurs de la matrice.

En variante, le capteur est commandé pour réaliser une détection directe. Les trois électrodes sont alors reliées à des potentiels continus ou bus d'alimentation continus. Le circuit de filtrage individuel peut être le même que celui représenté sur la figure 8.

En variante, le capteur comprend deux groupes comprenant chacun au moins un transistor. Les transistors sont commandés de sorte à réaliser une détection hétérodyne. Autrement dit, les transistors des deux groupes comprennent des électrodes commandées au moyen de signaux d'oscillation locaux présentant une même fréquence fosc mais étant en quadrature de phase. Ces électrodes sont par exemple des grilles. Autrement dit, le(s) transistor(s) du premier groupe comprend (comprennent chacun) une électrode commandée au moyen d'un premier signal d'oscillation local. Le(s) transistor(s) du deuxième groupe comprend (ou comprennent chacun) une électrode commandée au moyen d'un deuxième signal d'oscillation local. Le premier signal d'oscillation local et le deuxième signal d'oscillation local sont à la même fréquence fosc mais en quadrature de phase. Ce dispositif permet de choisir la fréquence fosc égale à fp et de limiter la bande du filtre passe-bande entre une fréquence nulle et $\Delta f/2$ sans pertes d'informations. Cela revient à une opération de démodulation dite en « bande de base ». L'obtention de signaux en quadrature peut également être utilisée de manière avantageuse lors de la formation de voies.

En variante, il est possible d'utiliser un capteur comprenant un unique transistor en utilisant un oscillateur local dont la fréquence fosc est la suivante :

$$fosc = f0 + \Delta f/2 \text{ ou } f0 - \Delta f/2$$

ainsi qu'un filtre passe bande avec des fréquences comprises entre 0 et $\Delta f$.

Sur la figure 10, on a représenté une vue partielle en coupe d'une antenne 401 comprenant un réseau de capteurs 402 tels que représentés sur la figure 9. L'antenne de réception est par exemple une antenne comprenant un réseau de capteurs tel que représenté sur la figure 9. Comme dans les modes de réception précédente, et comme visible sur la figure 10, les capteurs sont aptes à détecter une onde acoustique ou écho provenant d'un objet (cible) plongé dans un liquide dans lequel sont aussi plongés les capteurs. L'objet est distant du capteur ou du réseau de capteurs. L'onde acoustique vient de l'objet jusqu'au capteur en se propageant dans le liquide. Le capteur est apte détecter une onde acoustique présentant une composante parallèle à l'axe z d'empilement.

L'antenne de réception 401 comprend avantageusement un circuit de traitement central 65 recevant les signaux mesurés par les différents capteurs de la matrice et apte à traiter les différents signaux. A cet effet, la sortie des circuits est transmise au circuit de traitement central 65 au moyen d'une connexion électrique 66. Le circuit de traitement 65 est avantageusement réalisé sur un substrat de silicium.

Avantageusement, l'antenne 402 comprend un capot 67 fixé à la matrice de façon hermétique de façon à délimiter une cavité commune 68 logeant les électrodes des transistors des différents capteurs 402, les circuits d'interconnexion, les circuits de filtrage et un éventuel circuit de traitement central. La fixation est par exemple réalisée au moyen d'un joint d'étanchéité 70. Le réseau de capteurs 402 est en appui sur le capot 67 car la pression à l'intérieur de la cavité 68 peut être inférieure à la pression du milieu liquide.

La cavité 30 ou de manière plus générale, la face du réseau de capteurs opposée aux électrodes ou la face du substrat opposée à l'empilement semi-conducteur 4 ou la couche de contact est destinée à être plongée dans le milieu aqueux à observer. Cette solution permet de limiter les risques de corrosion. Elle permet de réaliser un plan de masse électrique, par exemple dans la couche de contact, entre les capteurs et l'eau ce qui peut être bénéfique afin d'éviter les effets de bruits électromagnétiques qui peuvent être présents dans le liquide au voisinage de l'appareil).

L'invention se rapporte également à un procédé de commande d'une antenne de réception selon l'invention dans lequel on commande au moins un transistor de sorte que ledit transistor réalise une détection hétérodyne.

L'invention se rapporte également à un procédé de commande d'une antenne active dans lequel on commande au moins un transistor de sorte que ledit transistor réalise une détection hétérodyne d'un signal réfléchi issu de la réflexion d'un signal émis par l'antenne d'émission acoustique.

**Revendications**

1. Antenne de réception (1) pour caméra acoustique, ladite antenne de réception comprenant au moins un réseau de capteurs acoustiques (2) comprenant chacun au moins un transistor à haute mobilité électronique à base de GaN, au moins un des capteurs (2) comprenant un substrat (3) délimitant une cavité (30) et un empilement semi-conducteur (4) formé sur le substrat (3) au moins en partie en regard de la cavité (30).

2. Antenne de réception selon la revendication précédente, dans laquelle au moins un réseau de capteurs acoustiques est un réseau bidimensionnel.

3. Antenne de réception selon la revendication précédente, dans laquelle au moins un réseau bidimensionnel est à mailles hexagonales.

4. Antenne de réception selon l'une quelconque des revendications précédentes, dans laquelle la cavité (30) présente une section sensiblement circulaire dans un plan perpendiculaire à une direction d'empilement z selon laquelle le substrat (3) et l'empilement semi-conducteur (4) sont empilés.

5. Antenne de réception selon l'une quelconque des revendications précédentes, dans laquelle au moins un des capteurs (2) comprend un transistor comprenant une grille (11) superposée à un contour fermé (43) délimitant la cavité (30) dans un plan perpendiculaire à la direction d'empilement (z).

6. Antenne de réception selon la revendication précédente, dans laquelle le transistor comprend en outre une première électrode (10) formée en regard de la cavité (30) et une deuxième électrode (9) formée en regard d'une partie (32) du substrat (3) entourant la cavité (30) dans un plan perpendiculaire à la direction d'empilement (z).

7. Antenne de réception selon la revendication précédente, dans laquelle la première électrode est une source (10) du transistor et la deuxième électrode est un drain (9) du transistor.

8. Antenne de réception selon l'une quelconque des revendications 6 à 7, dans laquelle la première électrode (210) comprend un anneau formé en regard de la cavité (30).

9. Antenne de réception selon l'une quelconque des revendications 6 à 8, dans laquelle la première et la deuxième électrode et la grille (11) sont sensiblement concentriques.

10. Antenne de réception selon l'une quelconque des revendications 5 à 9, dans laquelle la grille (11) s'étend en regard de sensiblement tout le périmètre du contour (43).

11. Antenne de réception selon l'une quelconque des revendications 6 à 9, dans laquelle au moins un capteur comprend plusieurs transistors comprenant chacun une grille (11) superposée au contour (42), les grilles comprennent chacune une portion d'anneau présentant une forme allongée suivant le contour (43), les portions d'anneau des différentes grilles s'étendant sur des portions du contour (43) présentant sensiblement la même longueur.

12. Antenne de réception selon l'une quelconque des revendications précédentes, dans laquelle au moins un capteur comprend un transistor comprenant une source, un drain et un circuit de filtrage (62) d'un signal mesuré entre la source et le drain, le circuit de filtrage (62) étant au moins partiellement formé sur l'empilement semi-conducteur (4) et/ou au moins partiellement compris dans l'empilement semi-conducteur (4).

13. Antenne de réception selon la revendication précédente, dans laquelle le circuit de filtrage (62) comprend un filtre passe-bande.

14. Antenne de réception selon l'une quelconque des revendications précédentes, dans laquelle au moins un des capteurs comprend un transistor commandé pour réaliser une détection hétérodyne d'un signal acoustique.

15. Antenne de réception selon la revendication précédente, dans laquelle le transistor est commandé de sorte à réaliser une détection hétérodyne d'un signal acoustique, ledit transistor comprenant une électrode alimentée au moyen d'un oscillateur local étant un signal sinusoïdal présentant une fréquence intermédiaire prédéterminée fixe.

16. Antenne de réception selon la revendication précédente, comprenant deux groupes comprenant chacun au moins un transistor, et dans lequel les transistors des groupes respectifs comprennent des électrodes des transistors des deux groupes étant alimentées au moyen d'oscillateurs locaux respectifs en quadrature de phase.

17. Antenne active (100) comprenant une antenne d'émission acoustique (1000) apte à émettre des impulsions acoustiques et l'antenne de réception (100) selon l'une quelconque des revendications 1 à 16.

18. Procédé de commande d'une antenne de réception selon l'une quelconque des revendications 1 à 16, dans lequel on alimente une électrode de grille d'au moins un transistor de l'antenne de réception au moyen d'un potentiel étant la somme d'un signal sinusoïdal et d'un potentiel de polarisation de la grille de sorte que ledit transistor réalise une détection hétérodyne d'un signal acoustique.

## Patentansprüche

1. Empfangsantenne (1) für eine akustische Kamera, wobei die Empfangsantenne mindestens ein Netzwerk von akustischen Sensoren (2) beinhaltet, welche jeweils mindestens einen Transistor mit hoher Elektronenbeweglichkeit auf der Grundlage von GaN beinhalten, wobei mindestens einer der Sensoren (2) ein Substrat (3) beinhaltet, welches einen Hohlraum (30) begrenzt und einen Halbleiterstapel (4), welcher an dem Substrat (3) zumindest teilweise gegenüber dem Hohlraum (30) gebildet ist.

2. Empfangsantenne nach dem vorhergehenden Anspruch, bei welcher mindestens ein Netzwerk von akustischen Sensoren ein zweidimensionales Netzwerk ist.

3. Empfangsantenne nach dem vorhergehenden Anspruch, bei welcher mindestens ein zweidimensionales Netzwerk sechseckige Maschen besitzt.

4. Empfangsantenne nach einem der vorhergehenden Ansprüche, bei welcher der Hohlraum (30) einen im Wesentlichen kreisförmigen Querschnitt in einer Ebene aufweist, welche rechtwinklig zu einer Stapelrichtung z ist, entlang welcher das Substrat (3) und der Halbleiterstapel (4) gestapelt sind.

5. Empfangsantenne nach einem der vorhergehenden Ansprüche, bei welcher mindestens einer der Sensoren (2) einen Transistor beinhaltet, welcher ein Gate (11) beinhaltet, welches eine geschlossene Kontur (43) überlagert, welche den Hohlraum (30) in einer Ebene rechtwinklig zur Stapelrichtung (z) begrenzt.

6. Empfangsantenne nach dem vorhergehenden Anspruch, bei welcher der Transistor zudem eine erste Elektrode (10) beinhaltet, welche gegenüber dem Hohlraum (30) gebildet ist und eine zweite Elektrode (9), welche gegenüber einem Abschnitt (32) des den Hohlraum (30) umgebenen Substrates (3) in einer zur Stapelrichtung (z) rechtwinkligen Ebene gebildet ist.

7. Empfangsantenne nach dem vorhergehenden Anspruch, bei welcher die erste Elektrode eine Source (10) des Transistors ist und die zweite Elektrode ein Drain (9) des Transistors ist.

8. Empfangsantenne nach einem der Ansprüche 6 bis 7, bei welcher die erste Elektrode (210) einen Ring beinhaltet, welcher gegenüber dem Hohlraum (30) gebildet ist.

9. Empfangsantenne nach einem der Ansprüche 6 bis 8, bei welcher die erste und die zweite Elektrode und das Gate (11) im Wesentlichen konzentrisch sind.

10. Empfangsantenne nach einem der Ansprüche 5 bis 9, bei welcher das Gate (11) sich gegenüber dem im Wesentlichen gesamten Konturumfang (43) erstreckt.

11. Empfangsantenne nach einem der Ansprüche 6 bis 9, bei welcher mindestens ein Sensor mehrere Transistoren beinhaltet, welche jeweils ein die Kontur (42) überlagerndes Gate (11) beinhalten, wobei die Gates jeweils einen Ringabschnitt beinhalten, welcher eine längliche Form entlang der Kontur (43) aufweist, wobei die Ringabschnitte der unterschiedlichen Gates sich über Abschnitte der Kontur (43) erstrecken, welche im Wesentlichen dieselbe Länge aufweisen.

12. Empfangsantenne nach einem der vorhergehenden Ansprüche, bei welcher mindestens ein Sensor einen Transistor beinhaltet, welcher eine Source, einen Drain und einen Filterschaltkreis (62) zum Filtern eines zwischen der Source und dem Drain gemessenen Signals beinhaltet, wobei der Filterschaltkreis (62) mindestens teilweise auf dem Halbleiterstapel (4) gebildet und/oder mindestens teilweise in dem Halbleiterstapel (4) beinhaltet ist.

13. Empfangsantenne nach dem vorhergehenden Anspruch, bei welcher der Filterschaltkreis (62) einen Passbandfilter beinhaltet.

14. Empfangsantenne nach einem der vorhergehenden Ansprüche, bei welcher mindestens einer der Sensoren einen gesteuerten Transistor beinhaltet, um eine Heterodyndetektion eines akustischen Signals durchzuführen.

15. Empfangsantenne nach dem vorhergehenden Anspruch, bei welcher der Transistor so gesteuert wird, dass er eine Heterodyndetektion eines akustischen Signals durchführt, wobei der Transistor eine mithilfe eines lokalen Oszillators gespeiste Elektrode beinhaltet, wobei das Signal ein sinusförmiges Signal ist, welches eine vorbestimmte feste Zwischenfrequenz aufweist.

16. Empfangsantenne nach dem vorhergehenden Anspruch, beinhaltend zwei Gruppen, welche jeweils mindestens einen Transistor beinhalten, und wobei die Transistoren der jeweiligen Gruppen Elektroden der Transistoren beider Gruppen beinhalten, die mithilfe jeweiliger lokaler Oszillatoren in Phasenquadratur gespeist werden.

17. Aktive Antenne (100), beinhaltend eine akustische Sendeantenne (1000), welche in der Lage ist, akustische Impulse auszusenden, und die Empfangsantenne (100) nach einem der Ansprüche 1 bis 16.

18. Verfahren zur Steuerung einer Empfangsantenne nach einem der Ansprüche 1 bis 16, bei welchem man eine Gate-Elektrode mindestens eines Transistors der Empfangsantenne mithilfe eines Potenzials speist, welches die Summe eines sinusförmigen Signals und eines Polarisationspotenzials des Gates in einer Weise ist, dass der Transistor eine Heterodyndetektion eines akustischen Signals durchführt.

## Claims

1. A reception antenna (1) for an acoustic camera, said reception antenna comprising at least one array of acoustic sensors (2), each comprising at least one GaN-based high electron mobility transistor, with at least one of the sensors (2) comprising a substrate (3) defining a cavity (30) and a semiconductor stack (4) formed on the substrate (3) at least partially facing the cavity (30).

2. The reception antenna as claimed in the preceding claim, wherein at least one array of acoustic sensors is a two-dimensional array.

3. The reception antenna as claimed in the preceding claim, wherein at least one two-dimensional array is a hexagonal grid array.

4. The reception antenna as claimed in any one of the preceding claims, wherein the cavity (30) has a substantially circular section in a plane perpendicular to a stacking direction z, along which the substrate (3) and the semiconductor stack (4) are stacked.

5. The reception antenna as claimed in any one of the preceding claims, wherein at least one of the sensors (2) comprises a transistor comprising a gate (11) placed above a closed boundary (43) defining the cavity (30) in a plane perpendicular to the stacking direction (z).

6. The reception antenna as claimed in the preceding claim, wherein the transistor further comprises a first electrode (10) formed facing the cavity (30) and a second electrode (9) formed facing a portion (32) of the substrate (3) surrounding the cavity (30) in a plane perpendicular to the stacking direction (z).

7. The reception antenna as claimed in the preceding claim, wherein the first electrode is a source (10) of the transistor and the second electrode is a drain (9) of the transistor.

8. The reception antenna as claimed in any one of claims 6 to 7, wherein the first electrode (210) comprises a ring formed facing the cavity (30).

9. The reception antenna as claimed in any one of claims 6 to 8, wherein the first and the second electrode and the gate (11) are substantially concentric.

10. The reception antenna as claimed in any one of claims 5 to 9, wherein the gate (11) extends facing substantially the entire perimeter of the boundary (43).

11. The reception antenna as claimed in any one of claims 6 to 9, wherein at least one sensor comprises several transistors each comprising a gate (11) placed above the boundary (42), the gates each comprising a ring portion having an elongated shape following the boundary (43), the ring portions of the various gates extending over the portions of the boundary (43) having substantially the same length.

12. The reception antenna as claimed in any one of the preceding claims, wherein at least one sensor comprises a transistor comprising a source, a drain and a filtering circuit (62) for filtering a signal measured between the source and the drain, the filtering circuit (62) being at least partially formed on the semiconductor stack (4) and/or at least partially included in the semiconductor stack (4).

13. The reception antenna as claimed in the preceding claim, wherein the filtering circuit (62) comprises a band-pass filter.

14. The reception antenna as claimed in any one of the preceding claims, wherein at least one of the sensors comprises a transistor controlled to carry out heterodyne detection of an acoustic signal.

15. The reception antenna as claimed in the preceding claim, wherein the transistor is controlled so as to carry out heterodyne detection of an acoustic signal, said transistor comprising an electrode powered by means of a local oscillator, wherein the signal is a sinusoidal signal having a fixed predetermined intermediate frequency.

16. The reception antenna as claimed in the preceding claim, comprising two groups each comprising at least one transistor, and wherein the transistors of the respective groups comprise electrodes of the transistors of the two groups that are powered by means of respective local phase quadrature oscillators.

17. An active antenna (100) comprising an acoustic emission antenna (1000) able to emit acoustic pulses and the reception antenna (100) as claimed in any one of claims 1 to 16.

18. A method for controlling a reception antenna as claimed in any one of claims 1 to 16, wherein a gate electrode of at least one transistor of the reception antenna is powered by means of a potential that is the sum of a sinusoidal signal and a biasing potential of the gate so that said transistor carries out heterodyne detection of an acoustic signal.

FIG.1

FIG.2

FIG.3

FIG.4

FIG.5

FIG.6

FIG.7

FIG.8

FIG.9

EP 3 339 875 B1

Milieu liquide

onde

Milieu neutre (gaz)

**FIG.10**

**FIG.11**